# EUROPEAN PATENT SPECIFICATION

(11) **EP 1 669 268 B1**
(45) Date of publication and mention of the grant of the patent: **25.02.2009**
(21) Application number: 05380263.3
(22) Date of filing: 02.12.2005
(51) Int. Cl.: B60T 7/10

(54) **Cable tensioner for a vehicle hand brake**
Seilspanner für eine Fahrzeug-Handbremse
Tenseur de câble pour le frein à main d'un véhicule

(30) Priority: 13.12.2004 ES 200402792 U
(43) Date of publication of application: 14.06.2006
(73) Proprietor: Batz, S.Coop., 48140 Igorre (Bizkaia) (ES)
(72) Inventor: Palacio Argüelles, Joseba, 48980 Santurtzi (Bizkaia) (ES); Intxaurbe Iriondo, Jatsu, 48142 Artea (Bizkaia) (ES)
(74) Representative: Igartua, Ismael

(56) References cited:
- EP-A- 0 972 690
- FR-A- 2 768 679
- GB-A- 2 373 035
- US-A- 5 509 326
- US-A1- 2002 153 206

## Description

### TECHNICAL FIELD

The present invention relates to a cable tensioner, and more specifically to a cable tensioner for vehicle hand brakes.

### PRIOR ART

Vehicle hand brakes which comprise a lever that is operated by the user to tighten or slacken a brake cable, braking the vehicle or releasing the brakes of said vehicle are known. Over time and as a result of use, it is necessary to adjust the tension of said cable.

US2002/0153206A1 shows the closest prior art and discloses a hand brake in which it is possible to adjust the tension of the cable manually, by means of a nut which can be accessed from the front part of the hand brake. The cable hooks onto an element situated on the exterior of the lever of said hand brake.

GB2373035A also discloses a hand brake in which it is possible to adjust the tension of the cable manually, by means of a nut that can be accessed from the front part of the hand brake. In this case, the elements required to tighten the cable are situated below the lever of said hand brake, and do not therefore occupy any space external to said lever.

### DISCLOSURE OF THE INVENTION

The main object of the invention is to provide a cable tensioner for vehicle hand brakes which allows adjusting the tension of the cable, occupies little space in the areas adjacent to the hand brake itself and which is simple.

The cable tensioner is applied to hand brakes of the type comprising a lever which is operated to tighten or slacken at least one cable, the hand brake moving to a braking position or to a brake release position. The cable tensioner comprises a cable equalizer where the cable is hooked, a threaded shaft connected to said cable equalizer, and an actuator threaded onto said threaded shaft and connected to the hand brake lever. When the lever is operated, the threaded shaft and the cable equalizer move, thereby tightening or slackening the cable.

The cable tensioner also comprises a nut or hexagonal head to adjust the tension of the cable by adjusting the distance between the actuator and the cable equalizer.

The cable equalizer and the actuator are disposed below the lever, and do not occupy space external to said hand brake lever. The threaded shaft is, at least partially, disposed below the lever, occupying a minimum space external to said hand brake lever.

These and other advantages and characteristics of the invention will be made evident in the light of the drawings and the detailed description thereof.

### DESCRIPTION OF THE DRAWINGS

Fig. 1 is a hand brake with the cable tensioner of the invention.
Fig. 2 is a bottom view of the cable tensioner of the invention.

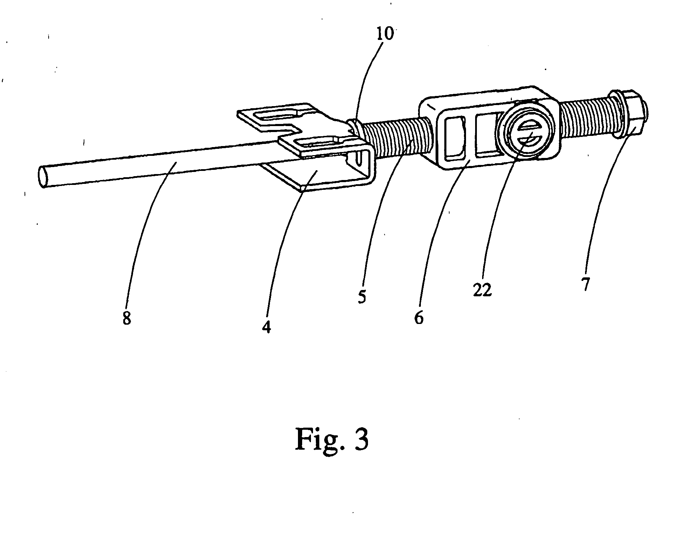

Fig. 3 is a perspective view of the cable tensioner of the invention.

### DETAILED DISCLOSURE OF THE INVENTION

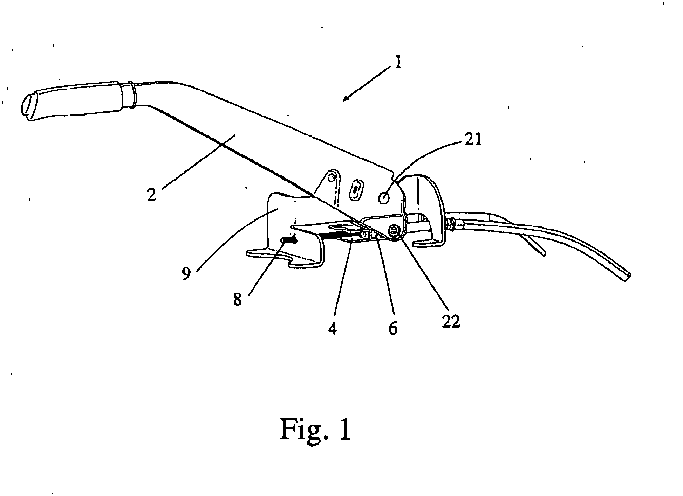

In the embodiment of the invention of the figure 1, a hand brake 1 that comprises a lever 2 is shown. In this embodiment, the hand brake comprises two cables 3 and 3'. When the lever 2 is raised, said cables 3 and 3' are tightened, the hand brake 1 moving to a braking position. If, on the other hand, said lever 2 is lowered, the cables 3 and 3' are slackened, moving the hand brake 1 to a brake release position.

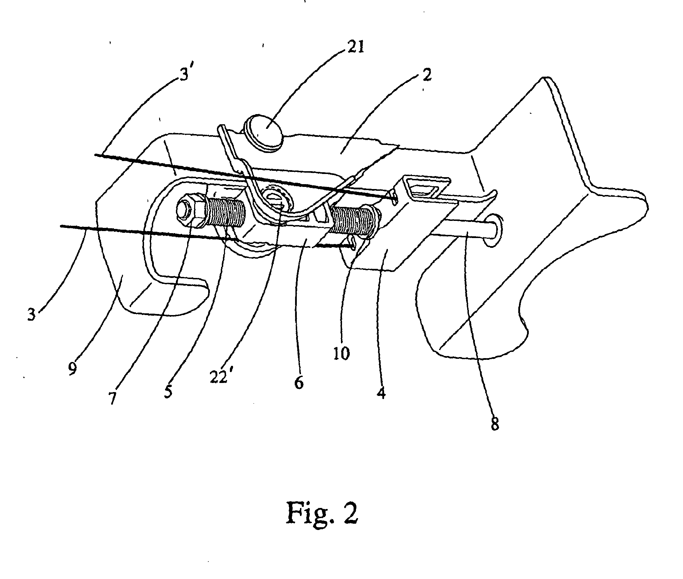

Figure 2 shows the cables 3 and 3' hooked onto a cable equalizer 4, and a threaded shaft 5 connected to said cable equalizer 4. An actuator 6 is threaded onto said threaded shaft 5, whereas a nut or hexagonal head 7 is connected to said threaded shaft 5. The actuator 6 is a plastic nut, and is connected to the lever 2 by means of two tabs 22 and 22'.

When the lever 2 is operated, said lever 2 rotates in relation to a spin axis 21 and generates an axial movement of the actuator 6 connected to the lever 2. The axial movement of the actuator 6 generates an axial movement of the threaded shaft 5 in conjunction with said axial movement of the actuator 6. Together with the threaded shaft 5, the cable equalizer 4 is moved axially, pushed by the front end of the threaded shaft 5, thereby tightening or slackening the cables 3 and 3'.

After the hand brake 1 has been installed in a vehicle, over time and as a result of use the tension of the cables 3 and 3' may vary. The nut or hexagonal head 7 is used to adjust the tension of said cables 3 and 3'. When said nut or hexagonal head 7 is rotated, a rotation of the threaded shaft 5 is generated thereby axially moving said threaded shaft 5, as the actuator 6 remains static. As the threaded shaft 5 moves axially, the cable equalizer 4, which is pushed by the front end of said threaded shaft 5, also moves axially thereby adjusting the distance between said cable equalizer 4 and the actuator 6.

The cable equalizer 4 is disposed below the lever 2. The actuator 6 is also disposed below said lever 2, whereas said threaded shaft 5 is at least partially disposed below said lever 2.

The nut or hexagonal head 7 is either connected to or forms part of the rear end of the threaded shaft 5, said nut 7 being accessed from the rear part of the hand brake 1.

The cable tensioner comprises a shaft guide 8, which extends from the front end of the threaded shaft 5 and which acts as a guide for the axial movement of said threaded shaft 5. Said shaft guide 8 passes through the cable equalizer 4 through a hole disposed in said cable equalizer 4. The cable equalizer 4 is moved by the pushing of the threaded shaft 5, assisted if necessary by a stop washer 10 disposed between the cable equalizer 4 and the front end of the threaded shaft 5. The shaft guide 8 passes through a hole disposed in the support 9 of the hand brake 1.

## Claims

1. Cable tensioner for a vehicle hand brake, comprising the hand brake (1),
a lever (2) to tighten or slacken at least one cable (3) so that said hand brake (1) moves to a braking or brake release position, and comprising the cable tensioner
a cable equalizer (4) where the cable (3) is hooked,
a threaded shaft (5) that pushes said cable equalizer (4),
an actuator (6) connected to the lever (2) and threaded onto the threaded shaft (5), so that by the operating of the lever (2) said threaded shaft (5) moves axially, and
a nut or hexagonal head (7) to adjust the distance between the actuator (6) and the cable equalizer (4), thereby adjusting the tension of the cable (3),
**characterised in that** the cable equalizer (4) is disposed below the lever (2), with the front end of the threaded shaft (5) pushing said cable equalizer (4), and the nut or hexagonal head (7) is connected to the rear end of the threaded shaft (5), said nut or hexagonal head (7) being accessed from the rear part of the hand brake (1) .

2. Cable tensioner according to the preceding claim, **wherein** comprises a shaft guide (8) which extends from the front end of the threaded shaft (5) and which passes through the cable equalizer (4), the shaft guide (8) guiding the axial movement of said threaded shaft (5).

3. Cable tensioner according to the preceding claim, **wherein** comprises a stop washer (10) housed in the shaft guide (8), said stop washer (10) being disposed between the threaded shaft (5) and the cable equalizer (4).

4. Cable tensioner according to claims 2 or 3, **wherein** the shaft guide (8) is guided by a support (9) of the hand brake (1).

5. Cable tensioner according to any of preceding claims, **wherein** the actuator (6) is a plastic nut.

## Patentansprüche

1. Kabelspanner für die Handbremse eines Fahrzeugs, umfassend die Handbremse (1), einen Hebel (2) zum Festziehen bzw. lockern von mindestens einem Kabel (3), so dass sich die Handbremse (1) in die Brems- bzw. Freigabeposition bewegt, wobei der Kabelspanner ebenso eine Kabelschwinge (4) umfasst, an der das Kabel (3) eingehängt ist, eine Gewindewelle (5), die die Kabelschwinge (4) schiebt, ein Stellglied (6), das mit dem Hebel (2) verbunden und auf der Gewindewelle (5) aufgedreht ist, so dass bei Betätigen des Hebels (2) sich die Gewindewelle (5) axial bewegt, und eine Mutter oder Sechskantschraube (7) zur Einstellung des Abstandes zwischen dem Stellglied (6) und der Kabelschwinge (4), wodurch die Spannung des Kabels (3) eingestellt wird,
**dadurch gekennzeichnet, dass** die Kabelschwinge (4) unter dem Hebel (2) so angeordnet ist, dass das vordere Ende der Gewindewelle (5) die Kabelschwinge (4) anschiebt und die Mutter oder Sechskantschraube (7) mit dem hinteren Ende der Gewindewelle (5) verbunden ist, so dass der Zugang zur Mutter oder Sechskantschraube (7) vom hinteren Teil der Handbremse (1) erfolgt.

2. Kabelspanner gemäß dem vorausgehenden Anspruch, wobei dieser eine Wellenführung (8) umfasst, die sich vom vorderen Ende der Gewindewelle (5) erstreckt und durch die Kabelschwinge (4) führt, wobei die Wellenführung (8) die axiale Bewegung der Gewindewelle (5) führt.

3. Kabelspanner gemäß dem vorausgehenden Anspruch, wobei dieser eine Sicherungsscheibe (10) umfasst, die in der Wellenführung (8) untergebracht ist, wobei die Sicherungsscheibe (10) zwischen der Gewindewelle (5) und der Kabelschwinge (4) angeordnet ist.

4. Kabelspanner gemäß Anspruch 2 oder 3, wobei die Wellenführung (8) durch eine Halterung (9) der Handbremse (1) geführt wird.

5. Kabelspanner gemäß einem der vorausgehenden Ansprüche, wobei das Stellglied (6) eine Kunststoffmutter ist.

## Revendications

1. Serre-câbles pour le frein à main d'un véhicule, comprenant le frein à main (1),
un levier (2) pour resserrer ou donner du ballant à au moins un câble (3) de telle manière que ledit frein à main (1) se déplace vers une position de frein ou de libération de frein et comprenant le serre-câbles
un égaliseur de tension (4) auquel le câble (3) est accroché, un arbre fileté (5) qui pousse ledit égaliseur de tension (4),
un actionneur (6) connecté au levier (2) et enroulé autour de l'arbre fileté (5) de manière à ce qu'en actionnant le levier (2) ledit arbre fileté (5) se déplace de manière axiale et
un écrou ou une tête hexagonale (7) pour régler la distance entre l'actionneur (6) et l'égaliseur de tension (4), ajustant ainsi la tension du câble (3),
**caractérisé en ce que** l'égaliseur de tension (4) est disposé sous le levier (2) avec l'extrémité avant de l'arbre fileté (5) qui pousse ledit égaliseur de tension (4) et l'écrou ou la tête hexagonale (7) est connectée à l'extrémité arrière de l'arbre fileté (5), ledit écrou ou ladite tête hexagonale (7) étant accessible depuis la partie arrière du frein à main (1).

2. Serre-câbles selon la revendication précédente qui comprend un guide d'arbre (8) qui s'étend de l'extrémité avant de l'arbre fileté (5) et qui traverse l'égaliseur de tension (4), le guide d'arbre (8) guidant le mouvement axial dudit arbre fileté (5).

3. Serre-câbles selon la revendication précédente qui comprend une rondelle d'arrêt (10) contenue dans le guide d'arbre (8), ladite rondelle d'arrêt (10) étant disposée entre l'arbre fileté (5) et l'égaliseur de tension (4).

4. Serre-câbles selon les revendications 2 ou 3 où le guide d'arbre (8) est guidé par un support (9) du frein à main (1).

5. Serre-câbles selon l'une quelconque des revendications précédentes, où l'actionneur (6) est un écrou en plastique.
